(19) Europäisches Patentamt
European Patent Office
Office européen des brevets

(11) Veröffentlichungsnummer : **0 087 075**
**B1**

(12) # EUROPÄISCHE PATENTSCHRIFT

(45) Veröffentlichungstag der Patentschrift : **30.12.86**

(51) Int. Cl.⁴ : **C 08 G 59/02**, C 08 G 59/50, C 08 G 18/10, C 08 L 75/04, B 32 B 27/00, C 09 J 3/16

(21) Anmeldenummer : **83101274.5**

(22) Anmeldetag : **10.02.83**

(54) **Verfahren zur Herstellung von Verbundfolien.**

(30) Priorität : **18.02.82 DE 3205733**

(43) Veröffentlichungstag der Anmeldung : **31.08.83 Patentblatt 83/35**

(45) Bekanntmachung des Hinweises auf die Patenterteilung : **30.12.86 Patentblatt 86/52**

(84) Benannte Vertragsstaaten : **AT CH DE GB LI LU**

(56) Entgegenhaltungen :
**DE-B- 1 545 056**
**FR-A- 2 061 772**
**GB-A- 1 161 178**
**GB-A- 2 031 431**
**US-A- 3 828 005**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Herold, Julius, Dr.**
**Marie-Curie-Strasse 2**
**D-4019 Monheim (DE)**
Erfinder : **Gruber, Werner, Dr.**
**Franz-Karl-Krämer-Strasse 7**
**D-4052 Korschenbroich 1 (DE)**
Erfinder : **Henke, Günter, Dr.**
**Espenstrasse 34**
**D-4040 Neuss 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die vorliegende Erfindung betrifft die Verwendung von Gemischen auf Basis von Epoxidgruppen enthaltenden Prepolymeren und primäre Aminogruppen enthaltenden Polyethern bzw. Polyamiden zur Herstellung von Verbundfolien.

Es ist bekannt, die verschiedensten sogenannten Epoxidharze mit Aminogruppen enthaltenden Polyethern zu Klebstoffen zu vernetzen. Weiterhin ist es insbesondere im Hinblick auf die Herstellung von Verbundfolien bekannt, Klebstoffsysteme, und zwar meist unter Mitverwendung von Lösungsmitteln aus isocyanathaltigen Prepolymeren und primären oder sekundären Aminogruppen aufweisenden Polyethern einzusetzen. Derartige Klebstoffsysteme, die meist erst kurz vor der Anwendung gemischt werden, liefern im allgemeinen brauchbare Haftungswerte.

Nachteilig an diesen Systemen ist der wegen der Polyadditionsstatistik meist vorhandene Anteil an monomeren Diisocyanaten, zum Beispiel Diphenylmethan-4,4'-diisocyanat oder Toluylendiisocyanat.

Diese führen nun wegen des insbesondere bei erhöhten Temperaturen nicht mehr vernachlässigbaren Isocyanatdampfdrucks zu einer Reihe aufwendiger arbeitshygienischer Maßnahmen. Ferner kann die Aushärtung der erwähnten Systeme auch von der Luftfeuchtigkeit und Materialfeuchtigkeit sowie alkoholischer Restlösungsmittel aus den eingesetzten Druckfarben beeinflußt werden.

Aufgabe der Erfindung war die Entwicklung von neuen, reaktiven Klebstoffen, die keine Isocyanate enthalten und damit die Nachteile dieser Systeme vermeiden, aber deren Adhäsion an den anwendungstechnisch relevanten Folien und deren Filmflexibilität den bisherigen Isocyanatsystemen entspricht.

Reagierende Gemische auf Basis von Epoxidendgruppen enthaltenden Polyethern, die durch Umsetzung von Polyethern bzw. Polyolen mit organischen Polyisocyanaten und anschließender Reaktion mit Glycid hergestellt worden waren, sowie aliphatischen, primären Aminogruppen enthaltenen Aminen oder auch Carbonsäureanhydriden waren bereits bekannt (GB-A-1161178). Derartige reagierende Gemische erwiesen sich insbesondere bei Zusatz von Füllstoffen in den üblichen größeren Mengen als vernetzende Versiegelungsmassen oder Kitte aufgrund ihrer guten Haftung an verschiedenen Materialien als geeignet. Hierbei hatten sie insbesondere aufgrund ihrer elastischen Eigenschaften als Dicht- und Siegelmassen Spalten oder Hohlräume zwischen starren Materialien zu überbrücken. Obwohl derartige Mischungen bereits seit langem bekannt waren und auch Variationen dazu seit längerem zum Stand der Technick gehören, findet sich kein Hinweis in der Literatur, derartige härtbaren Massen frei von weiteren füllenden Zusätzen zum Verkleben von flexiblen Kunststoff- oder Metallfolien einzusetzen. Die bei der sogenannten Folienkarschierung auftretenden Probleme sind völlig verschieden von denen, die beim Versiegeln bzw. Dichten sowie spaltüberbrückenden Verbinden starrer Materialien auftreten. Somit bestand eine weitere Aufgabe der Erfindung darin, universell für die verschiedensten Folien einsetzbare erhärtende Klebstoffe auf Basis von Epoxidverbindungen und Polyaminen zu finden.

Die Erfindung bezieht sich nun auf die Verwendung von Gemischen auf Basis von Epoxidgruppen enthaltenden Prepolymeren und primären Aminogruppen enthaltenden Polyethern bzw. Polyamiden zur Herstellung von Verbundfolien, dadurch gekennzeichnet, daß man als Epoxidgruppen enthaltende Verbindungen solche auswählt, die durch Umsetzung von wenigstens 2 endständige Isocyanatgruppen aufweisenden Polyether- bzw. Polyesterurethanen mit äquivalenten Mengen Glycid erhalten worden sind, und als Amine wenigstens 2 endständige primäre Aminogruppen enthaltende Polyether und/oder Polyamide mit einem Molgewicht zwischen 200 und 1 800 verwendet.

Geeignete, für das erfindungsgemäße Verfahren brauchbare, wenigstens 2 Isocyanatgruppen enthaltende Polyether bzw. Polyester können durch Umsetzung von Polyetherdiolen mit wenigstens bifunktionellen Isocyanaten in an sich bekannter Weise hergestellt werden. Bevorzugte Polyetherdiole leiten sich von 2 bis 4 Kohlenstoffatome enthaltenden Glykolen ab. Demnach kommen in Frage Polyethylen- und/oder Polypropylenglykol und/oder Polytetramethylenglykol (hergestellt durch Ringöffnungspolymerisation von Tetrahydrofuran). Auch Addukte von Ethylenoxid und/oder Propylenoxid an mehrwertige Alkohole wie Glycerin, Trimethylolpropan und Pentaerythrit sind brauchbar.

Des weiteren sind geeignet wenigstens 2 OH-Gruppen pro Molekül enthaltende Polyester, herstellbar aus bi- und mehrfunktionellen niedermolekularen Alkoholen wie Ethylenglykol, Propandiol, Butandiol, Hexandiol, Glycerin, Trimethylolpropan und niedermolekularen Carbonsäuren wie Adipinsäure, Isophthalsäure, Terephthalsäure, Hexandicarbonsäure sowie dimerisierte Fettsäure im Unterschuß. Auch der Ringöffnungspolymerisation in bekannter Weise herstellbare Polycaprolactondiole sind als Ausgangsmaterial verwendbar. Schließlich können auch Polyetherdiamine diesem Zweck dienen, wie etwa Polyoxypropylen- oder Polyoxyethylendiamine. Das Molgewicht Ausgangsmaterialien soll etwa zwischen 10 000 und 1 000, vorzugsweise zwischen 1 500 und 5 000 liegen.

Zur Umsetzung dieser Ausgangs- bzw. Grundmaterialien mit Isocyanaten kommen in erster Linie relativ niedermolekulare Diisocyanate in Betracht, wie Hexamethylendiisocyanat, Trimethylhexamethylendiisocyanat, Dicyclohexylmethandiisocyanat, Isophorondiisocyanat, Toluylendiisocyanat (Isomerengemisch) oder Diphenylmethandiisocyanat und gewisse Mengen polyfunktioneller Isocyanate. Weiterhin können für den erfindungsgemäßen Zweck mitverwendet werden mindestens drei Isocyanatgruppen enthaltende Umsetzungsprodukte aus mehrfunktionellen Alkoholen und Diisocyanaten (Umsetzungsverhältnis : 1 Mol Diisocyanat pro Hydroxylgruppe), zum Beispiel das Umsetzungsprodukt von Trimethylolpropan und Toluylendiisocyanat, sowie Umsetzungsprodukte aus einem Mol Wasser und drei Mol Diisocyanat, zum Beispiel ausgehend von Hexamethylendiisocyanat (N,N',N''-Tris(6-isocyanatohexamethylen) biuret), ferner auch andere aromatische Triisocyanate wie 4,4',4''-Triisocyanatotriphenylmethan und ebenso Polyisocyanate wie Polymethylenpolyphenylisocyanat.

Die Reaktion der Isocyanatgruppen mit Glycid

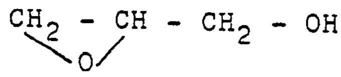

ist bekannt und erfolgt leicht insbesondere bei Zusatz von Katalysatoren wie ε-Caprolactam oder Organozinnverbindungen, zum Beispiel Dibutylzinndilaurat bei Temperaturen zwischen etwa — 5 und + 40 °C. Bei dieser Reaktion können je nach Anwendungsziel inerte organische Lösungsmittel wie Ketone, Kohlenwasserstoff, Chlorkohlenwasserstoffe sowie Ether und Ester eingesetzt werden. Insbesondere sind leicht flüchtige Lösungsmittel wie Aceton, Butanon, Hexan, Methylenchlorid, Diethylether und Essigester geeignet.

Die zweite Reaktionskomponente, die für das erfindungsgemäße Verfahren eingesetzt wird, ist ein wenigstens bifunktionelles Amin. Es müssen wenigstens zwei endständige primäre und gegebenenfalls auch sekundäre Aminogruppen vorhanden sein. Derartige Verbindungen sind bekannt bzw. werden in bekannter Weise hergestellt.

Ein bevorzugtes Grundgerüst für die Aminoverbindung sind die Polyetherdiole oder auch oligomeren Glykole.

Nach einer zweckmäßigen Ausführungsform geht man so vor, daß an die Polyetherdiole Acrylnitril angelagert wird. Die dabei resultierenden Addukte werden dann in bekannter Weise hydriert, wobei aus den Nitrilgruppen primäre Aminogruppen gebildet werden. Bevorzugt sind oligomere Glykole bzw. Polyetherglykole, die sich von Polyethylenglykol, Polypropylenglykol und Polytetramethylenglykol eines Molgewichts zwischen 200 und 4 500, insbesondere 300 und 2 000, ableiten.

Ferner erzielt man günstige Ergebnisse beim Einsatz von Polyaminoamiden, die in bekannter Weise durch Umsetzung von niedermolekularen Aminen wie Ethylendiamin, Propylendiamin, Dipropylentriamin, Diethylentriamin, Butylendiamin, Triethylentetramin bzw. deren Gemische mit dimerisierten Fettsäuren erhalten werden.

Bei den neuartigen Verfahren handelt es sich um eine spezielle Kombination zum Teil bekannter Verbindungen, um Klebungen zwischen verschiedensten Materialien zu bewirken. Die beiden Komponenten sollen erst kurz vor ihrer Anwendung gemischt werden. Die fertige Mischung hat ein potlife zwischen 1 und 48 Stunden in Abhängigkeit von den speziellen Komponenten und der Temperatur.

Es kann zweckmäßig sein, bei der Verklebung bzw. Kaschierung dünner, flexibler Folien leicht flüchtige Lösungsmittel als Hilfsmittel einzusetzen.

So lassen sich Verbunde aus Kunststoffolien wie Polyethylen-, Polypropylen-, Polyester-, Polyvinylchlorid-, Polystyrol-, Polycarbonat-, Polyimid-, Polyamidfolie usw., die auch lackiert, beschichtet oder metallbedampft sein können, herstellen. Des weiteren ist die Herstellung von Verbundfolien unter Verwendung von Metallfolien, zum Beispiel Aluminiumfolie, Kupferfolie, auch verzinnt, Bleifolie oder aber der verschiedenen Zellgläser bzw. Papier oder Vliesstoffe aus aromatischem Polyamid oder Polyester möglich.

## Beispiele

Komponente 1

Harz A

50 g (0,4 äq.) Diphenylmethan-4,4'-diisocyanat, 192,6 g (0,19 äq.) Polyesterdiol auf Basis Adipinsäure, Isophthalsäure und Hexandiol sowie Propylenglykol-1,2 mit einem Molgewicht von 2 000 und 1,33 g (0,01 äq.) eines Adduktes aus 6 Mol Ethylenoxid und 1 Mol Trimethylolpropan wurden in 250 g Methylethylketon gelöst und 2 Stunden bei 65 °C unter Sickstoff gerührt.

Gehalt an freien Isocyanatgruppen : 1,7 %

Der Lösung wurden nach dem Abkühlen 14,8 g (0,2 äq.) Glycid und 0,25 g Dibutylzinndilaurat zugegeben und weitere 4 Stunden bei 22 °C gerührt. Brookfield-Viskosität der Lösung bei 22 °C 120 mPa · s

freie Isocyanatgruppen : 0,00 %

Epoxidgruppen : 0,59 %

Harz B

Dieses Harz wird ebenso hergestellt wie das Harz A, jedoch mit 0,20 Äquivalenten des gleichen Polyesterdiols, aber ohne das Trimethylolpropanaddukt.

Harz C

Dieses Harz wird hergestellt wie Harz B, jedoch unter Zusatz von 1 %, bezogen auf Festkörper, N,N',N''-Tris-(6-isocyanatohexamethylen) biuret und entsprechend mehr Glycid.

Komponente 2

Die Härter bestehen aus den folgenden Polyaminen :

| Härter | Polyamin |
| --- | --- |
| I | Polyoxypropylendiamin (Molekulargewicht 230) |
| II | Polyoxypropylendiamin (Molekulargewicht 400) |
| III | Polyoxypropylentriamin (Molekulargewicht 400) |
| IV | Mischung aus 9 Gewichtsteilen Härter II und 1 Gewichtsteil Härter III |
| V | Polyaminoamid auf Basis von dimerisierten Fettsäuren und Polyalkylenaminen (Aminzahl 90). |

Zur Herstellung von Verklebungen wurden die Lösungen von Harz und Härter im Äquivalentverhältnis Epoxid/Amin von 1 : 1 gemischt. Dann wurden die Lösungen auf eine 19 µm dicke Polyethylenterephthalat-Folie aufgerakelt und 5 Minuten bei 22 °C getrocknet, wobei ein 3 µm dicker Klebstoffilm zurückblieb. Eine 50 µm dicke, coronavorbehandelte Polyethylenfolie wurde aufgelegt und mit einer Gummiwalze fest angedrückt.

Ferner sind das Äquivalenzverhältnis von Harz zu Vernetzer sowie der vorstehend beschriebene Verbund der verschiedenen Folien und die Verbundhaftung und Siegelnahthaftung dieser Verbunde aufgeführt.

Es bedeuten ferner

PETP Polyethylenterephthalat-Folie, d = 19 µm
PE Polyethylen (coronabehandelt)-Folie, d = 50 µm
Alu Aluminiumfolie, d 50 µm
PA Polyamid-6-Folie d = 50 µm
V Vlies aus aromatischen Polyamid

VH bedeutet die Verbundhaftung. Als Meßgröße (N/15 mm) diente die 180°-Schälfestigkeit bei der Trennung der beiden Folien, gemessen an einem 15 mm breiten Streifen, mit einer Abzugsgeschwindigkeit von 100 mm/min bei 22 °C.

SNH bedeutet die Siegelnahthaftung. Als Meßgröße (N/15 mm) diente die 180°-Schälfestigkeit bei der Trennung einer Siegelnaht des Folienverbundes, hergestellt bei 140 °C/2s, gemessen an einem 15 mm breiten Streifen, mit einer Abzugsgeschwindigkeit von 100 mm/min bei 22 °C.

Die Haftwerte wurden nach 14 Tagen Lagerung bei 22 °C bestimmt.

Siehe Tabelle 1 Seite 5 f.

Tabelle 1

| Beispiel | Harz | Härter | ÄV | Verbund* | VH | SNH |
|---|---|---|---|---|---|---|
| 1 | B | II | 1/1 | PETP / PE | 4,0 | 32 |
| 2 | B | V | 1/1 | PETP / PE | 4,0 | 38 |
| 3 | C | II | 1/1 | Alu / PE | 4,5 | 40 |
| 4 | C | II | 1/1 | PA / PE | 4,8 | 34 |
| 5 | C | II | 1/1 | PETP / PE | 3,5 | 29 |
| 6 | B | II | 1/1 | PETP / PE | 4,2 | 38 |
| 7 | B | IV | 1/1 | PETP / PE | 4,2 | 35 |
| 8 | A | IV | 1/1 | PETP / PE | 3,7 | 31 |
| 9 | B | II | 1/1 | PA / PE | 3,5 | 28 |
| 10 | B | I | 1/1 | PA / PE | 4,5 | 32 |
| 11 | B | I | 2/1 | PA / PE | 5,0 | 34 |
| 12 | B | I | 1/1 | Alu / PE | 8,5 | 45 |
| 13 | B | II | 1/1 | Alu / PE | 5,0 | 41 |
| 14 | B | I | 1/1 | PETP / V | 15,0 | - |
| 15 | B | I | 1/1 | PETP / Kupfer | 12,0 | - |

**Patentansprüche**

1. Verwendung von Gemischen auf Basis von Epoxidgruppen enthaltenden Prepolymeren und primäre Aminogruppen enthaltenden Polyethern bzw. Polyamiden zur Herstellung von Verbundfolien, dadurch gekennzeichnet, daß man als Epoxidgruppen enthaltende Verbindungen solche auswählt, die durch Umsetzung von wenigstens 2 endständige Isocyanatgruppen aufweisenden Polyethern- bzw. Polyesterurethanen, die auf Verbindungen mit freien OH- bzw. $NH_2$-Gruppen eines Molgewichts zwischen 10 000 und 1 000 basieren, mit äquivalenten Mengen Glycid erhalten worden sind, und als Amine wenigstens 2 endständige primäre Aminogruppen enthaltende Polyether und/oder Polyamide mit einem Molgewicht zwischen 200 und 1 800 einsetzt.

2. Verwendung der reagierenden Gemische nach Anspruch 1, dadurch gekennzeichnet, daß man bei der Herstellung der Epoxidverbindung von Isocyanaten ausgeht, die auf Verbindungen eines Molekulargewichts zwischen 5 000 und 1 500 basieren.

3. Verwendung von reagierenden Gemischen nach Anspruch 1 und 2 zur Herstellung von Verbundfolien auf Basis von Polyethylen und Polypropylen sowie Polyethylenterephthalat.

**Claims**

1. The use of mixtures based on prepolymers containing epoxide groups and polyethers or polyamides containing primary amino groups for the production of composite films, characterized in that compounds which have been obtained by reaction of polyether or polyester urethanes containing at least two terminal isocyanate groups and based on compounds containing free OH or $NH_2$-groups and having a molecular weight of from 10,000 to 1 000 with equivalent quantities of glycidol are used as the compounds containing epoxide groups while the amines used are polyethers and/or polyamides containing at least two terminal primary amino groups and having a molecular weight of from 200 to 1 800.

2. The use of the reacting mixtures claimed in Claim 1, characterized in that the isocyanates used in the production of the epoxide compound are based on compounds having a molecular weight of from 5 000 to 1 500.

3. The use of the reacting mixtures claimed in Claims 1 and 2 for the production of composite films based on polyethylene and polypropylene and also polyethylene terephthalate.

**Revendications**

1. Utilisation de mélanges à base de prépolymères contenant des groupes époxy et de polyéthers ou polyamides contenant des groupes amino primaires en vue de la fabrication de feuilles composites, caractérisée en ce qu'on choisit comme composés contenant des groupes époxy ceux qui ont été obtenus par réaction de polyéthers- ou polyesters-uréthanes présentant au moins 2 groupes isocyanate terminaux, qui sont à base de composés avec groupes OH ou $NH_2$ libres d'un poids moléculaire entre 10 000 et 1 000, avec des quantités équivalentes de glycidol, et, en tant qu'amines, des polyéthers et/ou polyamides contenant au moins 2 groupes amino primaires terminaux ayant un poids moléculaire entre 200 et 1 800.

2. Utilisation des mélanges réactifs selon la revendication 1, caractérisée en ce que dans la préparation du composé époxy on part d'isocyanates à base de composés d'un poids moléculaire entre 5 000 et 1 500.

3. Utilisation de mélanges réactifs selon les revendications 1 et 2 en vue de la fabrication de feuilles composites à base de polyéthylène et de polypropylène, de même que de poly(téréphtalate d'éthylène).